# EUROPEAN PATENT SPECIFICATION

(11) **EP 0 594 528 B1**
(45) Date of publication and mention of the grant of the patent: **03.04.1996**
(21) Application number: 93610051.0
(22) Date of filing: 17.09.1993
(51) Int. Cl.: A22B 7/00, A22B 5/00

(54) **Process and apparatus for treatment of half-carcasses**
Verfahren und Vorrichtung zum Behandeln von Karkashälften
Procédé et installation pour le traitement des demi-carcasses

(30) Priority: 18.09.1992 DK 1156/92
(43) Date of publication of application: 27.04.1994
(73) Proprietor: SLAGTERIERNES FORSKNINGSINSTITUT, DK-4000 Roskilde (DK)
(72) Inventor: Folkmann, Peter, DK-4140 Borup (DK); Moller, Helge, DK-2920 Charlottenlund (DK)
(74) Representative: Jessen, Ivar Bergishagen

(56) References cited:
- WO-A-82/03748
- DE-A- 2 735 918
- FR-A- 2 546 423
- US-A- 3 940 998

## Description

The present invention relates to a process for treatment of half carcasses conveyed in succession onto treatment means by means of conveyor belts positioned in continuation of each other, said half carcasses being situated horizontally with their longitudinal direction generally perpendicular to the direction of conveyance. The invention also relates to a plant for treatment of half carcasses.

On its way through a slaughter house a carcass is subjected to various treatments, like for instance sampling, classification, stamping, cutting, etc., said treatments all requiring an exact position of the carcass in relation to the treatment means or an adjustment of these means in relation to the position of the carcass.

During the cutting up carcasses are often manually moved and positioned in relation to the treatment means, which is a heavy and streneous task, but this task may also be performed by means of equipment constructed therefor.

From EP Patent No. 0 078 285 a process of the type stated by way of introduction is known, in which pairs of half carcasses are conveyed in succession on a conveyor belt. At a certain time the conveyor belt is stopped, and an operator visually inspects those parts of the half carcass to be sawed off and determines by experience the position of the sawing lines, whereafter he passes some measuring devices over the downstream half carcass along the imaginary sawing lines, and by pushing of a button, data indicating the positions of the sawing lines are transferred to the control unit of the plant. Subsequently, the corresponding data are measured and registered in respect of the upstream half carcass. The conveyor belt is started again and the downstream half carcass is transferred to a succeeding conveyor belt which is displaceable transversely to the direction of conveyance. The displaceable conveyor belt is then adjusted in such a way that the cutting line for the fore-end of the half carcass is in alignment with a stationary fore-end saw, and a ham saw is then displaced transversely to the conveyor belt until in alignment with the desired cutting line of the ham, after which the half carcass is conveyed towards the saws, where it is cut up. Then the up-stream half carcass is transferred to the displaceable conveyor belt which is laterally adjusted depending on the data measured. The ham saw is likewise adjusted, after which the half carcass is conveyed towards the saws and cut up.

This process suffers from the drawback that the position and the measuring of the cutting lines forming the basis for the subsequent positioning of the carcass in relation to the saws is carried out manually and requires an experienced operator to ensure that the cutting is performed with the desired accuracy. The work is demanding and monotonous, and in case of inattentiveness and fatigueness errors may occur.

The object of the invention is to provide a process and a plant for the treatment of half carcasses, which allows an automatic realignment and measuring of half carcasses while still present on the conveyor belt. It is also the object to provide a process and a plant for the positioning of the half carcasses and the treatment means which may be mutually movable, by simple means based on the result of the realignment and the measuring.

This is achieved according to the invention by a process of the type stated by way of introduction, said process being characteristic in that realignment means are moved into the path of motion of a half carcass down the conveyor belt, in that the half carcass when resting against the realignment means is stopped and straightened to a predetermined angle, in that the distance between two characteristic points in the half carcass is measured automatically while the half carcass is resting against the alignment means, and that the half carcass and at least one treatment means are displaced relative to each other in a direction transversely to the conveyor belts in accordance with the automatically measured distance between the two characteristic points of the half carcass.

As the half carcass on account of friction against the running conveyor belt is pressed against the realignment means, it will take up a position which is dependent on the position of the realignment means in relation to the conveyor belt. Thereby is achieved that the position and the angle in relation to the conveyor belt is known, which in combination with the knowledge of the distance between a first and a second characteristic point of the carcass makes an exact mutual positioning of the half carcass and the treatment means possible in a manner known per se, for instance by displacing a half carcass transversely to the direction of conveyance, whereby a certain part of the half carcass, for instance the ham, is correctly positioned opposite a ham saw placed downstream.

From measurements of a big number of carcasses it has been found that on basis of the knowledge of the distance between two characteristic points of the carcass, for instance the distance between the pubis and the axilla of a half carcass, the location of the various parts, for instance the fore-end or the ham, of the half carcass can be determined with sufficient exactness. The result of these measurements may be available as table values registered in a computer which is used for the above-mentioned determination of the positions of the carcass portions. It has in particular been found that the position of the two cuts to be made when cutting half carcasses in three, is determined sufficient exactly by the process in question, as the ham cut is made in a fixed distance form the pubis in the longitudinal direction of the carcass, while the fore-end cut is determined by the distance between the pubis and the axilla.

In a preferred embodiment of the process the back of the half carcass is brought to rest against the realignment means. As the backside is more rigid than the ventral side it is achieved that the half carcass when resting against the realignment means takes up a more well-defined position.

In a second embodiment the characteristic points may be the pubis and axilla of the half carcass.

For determining the distance between the characteristic points mechanical sensors are used in another embodiment, and in a further embodiment two sensor means may be relatively taken apart transversely to the conveyor belt for engaging the pubis and the axilla of a half carcass, the distance between these points of engagement being then determined. In a preferred embodiment the distance between the characteristic points is determined by an automatic measuring of the positions of the points. By measuring the position of the two characteristic points, an exact calculation of the distance between the points is made possible. Plants are known in which distances are optically measured or measured by means of ultra sound, but the results of such systems are normally less accurate than those achieved by taking simple measurements of position.

Mechanical sensors may be produced to be robust against the influences, to which they are subjected in a slaughter house. When a sensor engages a characteristic point, which may for instance be ascertained in that the force exerted by the sensor against the point exceeds a predetermined value, the position of the sensor is measured in relation to the conveyor belt in a manner known per se by means of position indicators or the like devices. The position indicators may emit signals to be fed to a computer which is programmed to calculate the distance between the points of engagement.

According to another embodiment one of the sensor means is stationary, while the second sensor means is moved until it engages the pubis or the axilla, whereafter the movement is continued, the half carcass thereby being moved until the first sensor means is influenced by the axilla or the pubis by a force of a predetermined size, at which time the position of the second sensor means is measured. In this embodiment the carcass is stretched by a predetermined force before the measuring of the position, which gives a more reliable measuring result.

According to another embodiment the half carcass may after the measuring be displaced transversely to the conveyor belt by means of one of the sensor means to a position relative to at least one treatment means determined on basis of the distance between the pubis and the axilla. In this embodiment one of the sensors is used to pull the half carcass transversely to the conveyor belt until it is placed precisely in relation to a subsequent treatment means, for instance a ham saw or a fore-end saw.

In a further embodiment at least one treatment means may be placed over, in continuation of or between the conveyor belts, and it may be displaced relative to a half carcass in a direction transversely to the conveyor belts in dependency of the automatically measured distance between the two characteristic points of the half carcass. If the subsequent treatment of the half carcasses for instance is sawing, the ham saw may be stationary, while the fore-end saw may be movable transversely to the direction of the conveyor belt, the sawing of the half carcass thus being possible in two places simultaneously.

If half carcasses are conveyed in pairs after each other, one of the half carcasses of the pair can be brought to rest against the realignment means by reversal of one of the conveyor belts.

The invention also relates to a plant for the treatment of half carcasses and comprises conveyor belts for conveying the half carcasses, said plant being characteristic in comprising realignment means which are moveable between a resting position, in which a half carcass freely passes the means, and an active position, in which the realignment means stop and in a realigning manner rest against a half carcass on the running conveyor belt, means for automatic measuring of the distance between two characteristic points in the half carcass, and means for displacing the half carcass and at least one treatment means relative to each other in a direction transversely to the conveyor belts in accordance with the automatically measured distance between the two characteristic points of the half carcass.

Further embodiments of the plant according to the invention are described in claims 12-15.

The invention will now be explained in detail in the following by means of some embodiments of a plant according to the invention and with reference to the accompanying drawing, in which
Fig. 1, strictly schematically, shows a plan view of a plant according to the invention,
Fig. 2 is a lateral view of part of the plant, seen in direction II in Fig. 1,
Fig. 3 is a sectional view in a part of the plant along the line III-III in Fig. 1,
Fig. 4 is a plan view at a larger scale of a fixture carrying the realignment means of the plant as well as part of the conveyor belt of the plant,
Fig. 5 is a longitudinal view of the fixture and the conveyor belts along the line V-V in Fig. 4,
Fig. 6 is a cross-sectional view of the fixture and a conveyor belt along the line VI-VI in Fig. 4.

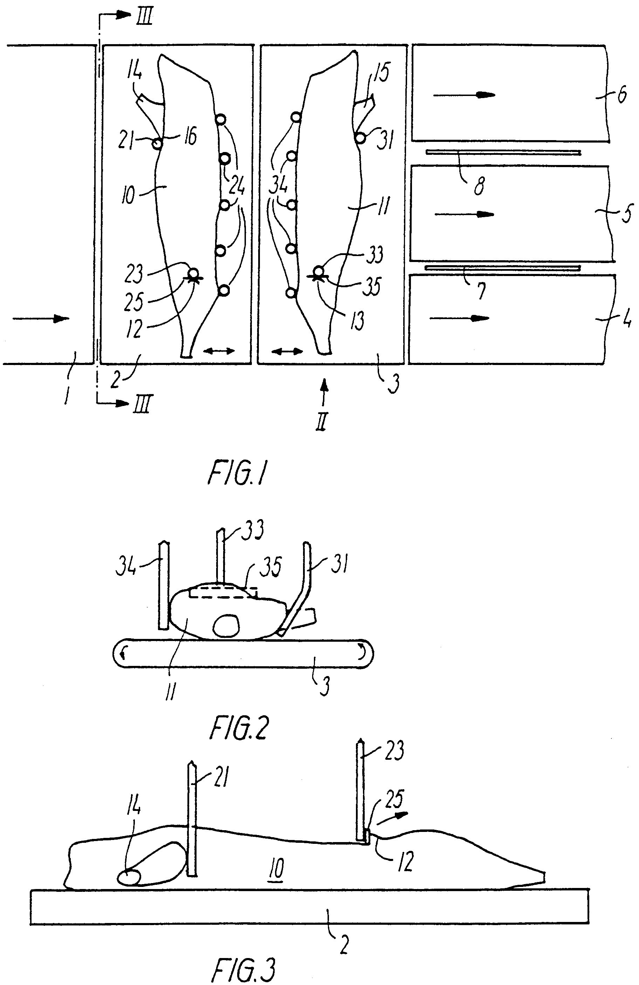

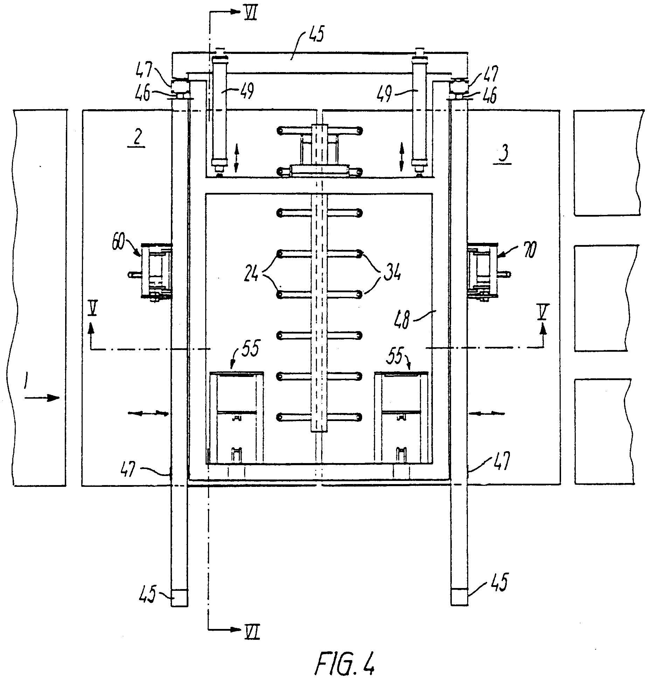

Fig. 1 shows a conveyor belt 1 for conveying half carcasses of pigs and a treatment or cutting station comprising three conveyor belts 4, 5 , 6, between which a stationary ham saw 7 and a laterally displaceable fore-end saw 8 are provided. Between the conveyor belt 1 and the cutting station two conveyor belts 2 and 3 are provided, on which a pair of half carcasses 10 and 11, respectively, is shown, the movement of said carcasses having been stopped by realignment means 24 and 34, respectively, which are suspended in a fixture (not shown) positioned above the conveyor belts 2 and 3, which fixture will be described in detail in the following with reference to Figs. 4-6. In the embodiment shown the realignment means are arms 24 and 34 of round bars. The figure further shows mechanical sensor means shaped as arms 23 and 33 for engaging the pubis 12 and 13, respectively, of the half carcass, and other mechanical sensors shaped as arms 21 and 31 for engaging the axillas 16 and 17 of the half carcasses.

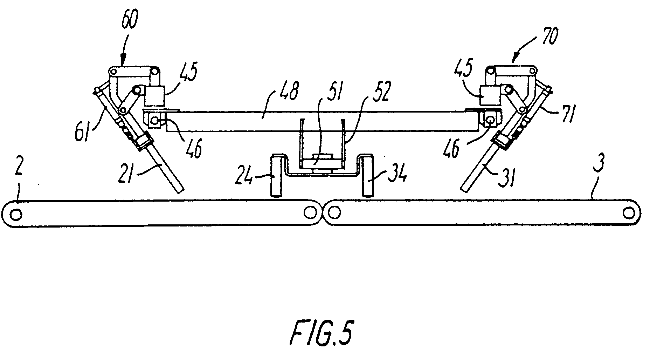

The arms 21 and 31 are bent at their free ends for better engagement with the axilla of the half carcass, as will best be seen from Fig. 2. The arms 21 and 31 may, however, like in the embodiment shown in Fig. 5, be placed at an angle with the conveyor belt, the same effect being achieved. The arms 23 and 33 are at their free ends provided with a transverse bar 25 and 35, respectively, which facilitates the engagement of the pubis 12 and 13 of the carcass.

The above-mentioned realignment means and sensors are suspended in a fixture, which will now be described in detail with reference to Figs. 4-6.

A support 45 extending over the conveyor belts is provided with slide bars 46 carrying a frame 48, said slide bars being fastened to the frame by means of slide bushes 47, the frame 48 being thus displaceable transversely to the direction of conveyance of the conveyor belts. For displacement of the frame two pneumatic cylinders 49 are placed between the frame 48 and the support 45.

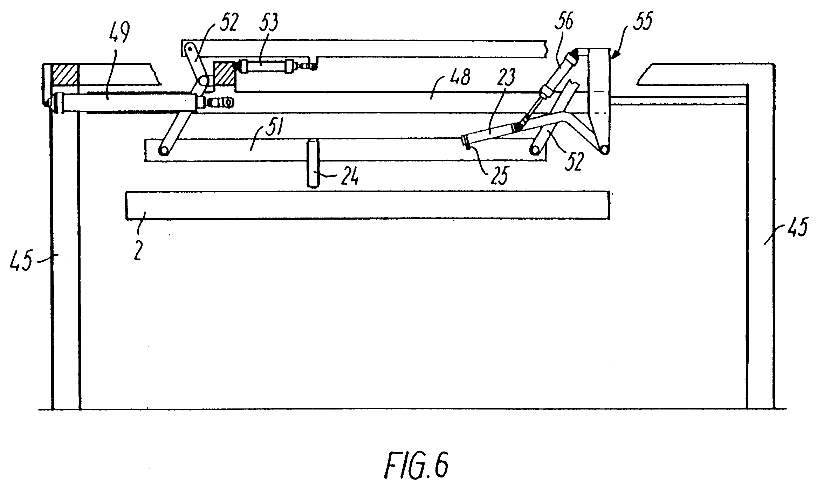

The frame 48 carries a beam 51, to which arms 24 and 34 are fastened. For the sake of clarity only one single arm 24 is shown in Fig. 6. The beam 51 is suspended in swinging arms 52 connected with a pneumatic cylinder 53, through which the beam 51 and consequently the arms 24 and 34 can be lifted from and lowered towards the surfaces of the conveyor belts 2 and 3. The frame 48 carries additional mechanisms 55 containing pneumatic cylinders 56 for moving the arms 23 and 33 in such a way that they can swing down against or be lifted from the conveyor belts.

The support 45 also carries mechanisms 60 and 70, respectively, for moving the arms 21 and 31, respectively. The mechanisms 60 and 70 each contain a pneumatic cylinder 61 and 71, respectively, by means of which the respective arms 21 and 31 can be lifted from and lowered towards the surfaces of the conveyor belts.

In connection with the movable frame 48 a position indicator is provided, said indicator making it possible to determine the position of the frame in relation to the support 45.

The mechanisms 60 and 70 are further constructed in such a way that the accompanying arms 21 og 31 are lifted from the conveyor belt, when a certain pull acting on the arms in a direction transversely to the direction of the conveyor belt is ascertained, and a signal is emitted that the position of the frame 48 is to be registered at this time.

The plant works in the following way. A pair of half carcasses 10 and 11 is conveyed from belt 1 to belts 2 and 3, their backsides turned against each other and the rind side turned against the belt. A sensor (not shown) registers when the downstream half carcass 11 has entered the belt 3. The arms 24 and 34 are then lowered between the half carcasses 10 and 11, belt 3 is reversed and the half carcasses are carried towards the respective arms 24 and 34, where they are being stopped and on account of the friction between the conveyor belt and the body pressed against the respective arms in such a way that the carcasses are realigned and possibly bent in the loin.

Then the arms 21, 31 and 23, 33 are lowered against the half carcasses, and the frame 48 is displaced towards the ham end. When the arms 23 and 33 touch the pubes 12 and 13 of the half carcasses, the half carcasses 10 and 11 are pulled along, whereby the axillas 16 and 17 of the half carcasses engage the arms 21 and 31. When a certain predetermined pull in the arms 21 and 31 is registered, the position of the movable frame 48 in relation to the support is registered, and thereby the positions of the arms 25 and 35, respectively. The arms 21 and 31 are then swung away from the half carcasses, while the pubis arms 23 and 33 by displacement of the frame 48 pull the half carcasses transversely to the conveyance direction of the conveyor belts until the carcasses take up a predetermined position in relation to the ham saw 7. The half carcasses 10 and 11 are now placed in the proper angle in relation to the ham saw 7. The fore-end saw 8 is displaced in accordance with the position measuring and distance determination performed to the correct positioning in relation to the half carcass 11. Then the arms 23, 24 and 33, 34, respectively are lifted simultaneously with a renewed reversal of the conveyor belt 3, the half carcass 11 being conveyed to the belts 4 and 5 and sawed through by the saws 7 and 8. Then the fore-end saw 8 is, if necessary, displaced to the correct position in relation to the half carcass 10 and the ham saw 7, and the half carcass 10 is then taken to the belts 4, 5, 6 and sawed through by the saws 7 and 8, whereafter the same cycle is repeated with a new pair of half carcasses.

## Claims

1. A process for treatment of half carcasses (10,11) conveyed in succession onto treatment means (7,8) by means of conveyor belts (2,3) positioned in continuation of each other, said half carcasses being situated horizontally with their longitudinal direction generally perpendicular to the direction of conveyance, **characterized** in that realignment means (24, 34) are moved into the path of motion of a half carcass down the conveyor belt (2,3), in that the half carcass when resting against the realignment means is stopped and straightened to a predetermined angle, in that the distance between two characteristic points (12,13;16,17) in the half carcass is measured automatically while the half carcass is resting against the alignment means, and that the half carcass (10,11) and at least one treatment means (7,8) are displaced relative to each other in a direction transversely to the conveyor belts (2,3) in accordance with the automatically measured distance between the two characteristic points (12,13;16,17) of the half carcass.

2. A process according to claim 1, **characterized** in that the back of the half carcass (10,11) is brought to rest against the realignment means (24,34).

3. A process according to claim 1 or 2, **characterized** in that the characteristic points are the pubis (12,13) and the axilla (16,17) of the half carcass.

4. A process according to claims 1-3, **characterized** in that for determining the distance between the characteristic points (12,13;16,17) mechanical sensors (21,23;31,33) are provided.

5. A process according to claim 4, **characterized** in that the two sensor means (21,23;31,33) are relatively moved apart transversely to the conveyor belt for engaging the pubis (12,13) and the axilla (16,17) of a half carcass (10,11), whereafter the distance between these points of engagement is determined.

6. A process according to claims 1-6, **characterized** in that the distance between the characteristic points (12,13;16,17) is determined by automatic measuring of the positions of the points.

7. A process acording to claim 6, **characterized** in that one of the sensor means (21,23;31,33) is stationary, while the second sensor means (23,21;33,31) is moved until it engages the pubis (12,13) or the axilla (16,17), whereafter the movement is continued, the half carcass thereby being moved until the first sensor means is influenced by the axilla or the pubis by a force of a predetermined size, at which time the position of the second sensor means is measured.

8. A process according to claim 4 or 5, **characterized** in that after the measuring the half carcass (10,11) is displaced transversely to the conveyor belt (2,3) by means of one of the sensor means (21,23;31,33) to a position relative to at least one treatment means (7,8), determined on basis of the distance between the pubis and the axilla.

9. A process according to claim 1, **characterized** in that at least one treatment means (7,8) placed above, in continuation of or between the conveyor belts (2,3) is displaced relative to a half carcass in a direction transversely to the conveyor belts (2,3) in accordance with the automatically measured distance between the two characteristic points (12,13;16,17) of the half carcass.

10. A process according to claims 1-9, and in which the corresponding half carcasses (10,11) are advanced in pairs one after the other, **characterized** in that one of the half carcasses (11) is brought to rest against the realignment means (34) by reversing one of the conveyor belts (3).

11. A plant for treatment of half carcasses (10,11) comprising conveyor belts (2-6) for conveying the half carcasses, which are conveyed in succession and situated horizontally with their longitudinal direction generally perpendicular to the direction of conveyance, on to treatment means (7,8), **characterized** in that it comprises realignment means (24,34) which are moveable between a resting position, in which a half carcass (10,11) freely passes the means, and an active position, in which the realignment means (24,34) stop and in a realigning manner rest against a half carcass on the running conveyor belt, means (21,31;23,33) for automatic measuring of the distance between two characteristic points (12,13;16,17) in the half carcass, and means for displacing the half carcass (10,11) and at least one treatment means (7,8) relative to each other in a direction transversely to the conveyor belts (2,3) in accordance with the automatically measured distance between the two characteristic points (12,13;16,17) of the half carcass.

12. A plant according to claim 11, **characterized** in comprising a first mechanical sensor means (23,33) adapted to engage the pubis (12,13) of a half carcass (10,11) resting against the realignment means (24,34), a second mechanical sensor means (21,31) adapted to engage the axilla (16,17) of the half carcass, and in that the sensor means are adapted to be moved apart transversely to the conveyor belt (2,3) into engagement.

13. A plant according to claim 11 or 12, **characterized** in that the conveyor belt has a reversible section (3).

14. A plant according to claims 11-13, **characterized** in that one of the sensor means (21,31,23,33) is displaceable and adapted to displace a half carcasss (10,11) transversely to the direction of the conveyor belt.

15. A plant according to claims 11-14, **characterized** in that it comprises three parallel conveyor belts (4,5,6) and in that the treatment means comprise a back part saw (7) and a front part saw (8), of which one or both are displaceable transversely to the direction of the conveyor belt.

## Patentansprüche

1. Ein Verfahren zur Bearbeitung von Schlachttier-Körperhälften (10, 11), die nacheinander zu Bearbeitungsmitteln (7, 8) mit Hilfe von Förderbändern (2, 3) gefördert werden, die in Aufeinanderfolge angeordnet sind, wobei die Körperhälften horizontal, und zwar mit ihrer Längsausrichtung im allgemeinen senkrecht zur Förderrichtung, gelagert sind, **dadurch gekennzeichnet,** daß Ausrichtmittel (24, 34) in den Bewegungsweg einer Körperhälfte entlang des Förderbandes (2, 3) bewegt werden, daß die Körperhälfte, wenn sie gegen die Ausrichtmittel ruht, angehalten und auf einen vorbestimmten Winkel ausgerichtet wird, daß der Abstand zwischen zwei charakteristischen Punkten (12, 13; 16, 17) an der Körperhälfte automatisch gemessen wird, während die Körperhälfte gegen die Ausrichtmittel anliegt, und daß die Körperhälfte (10, 11) und mindestens ein Bearbeitungsmittel (7, 8) relativ zueinander in einer Richtung quer zu den Förderbändern (2, 3) entsprechend dem automatisch gemessenen Abstand zwischen den beiden charakteristischen Punkten (12, 13; 16, 17) der Körperhälfte verlagert wird.

2. Ein verfahren nach Anspruch 1, **dadurch gekennzeichnet,** daß der Rücken der Körperhälfte (10, 11) zur Anlage gegen die Ausrichtmittel (24, 34) gebracht wird.

3. Ein verfahren nach Anspruch 1 oder 2, **dadurch gekennzeichnet,** daß die charakteristischen Punkte das Schambein (lat. pubis) (12, 13) und die Achselhöhle (lat. axilla) (16, 17) der Körperhälfte sind.

4. Ein Verfahren nach Ansprüchen 1-3, **dadurch gekennzeichnet,** daß zur Bestimmung des Abstandes zwischen den charakteristischen Punkten (12, 13; 16, 17) mechanische Sensoren (21, 23; 31, 33) vorgesehen sind.

5. Ein Verfahren nach Anspruch 4, **dadurch gekennzeichnet,** daß die zwei Sensormittel (21, 23; 31, 33) quer zum Förderband relativ auseinanderbewegt werden, um an dem Schambein (12, 13) und der Achsel (16, 17) einer Körperhälfte (10, 11) anzugreifen, worauf der Abstand zwischen diesen Angriffspunkten bestimmt wird.

6. Ein Verfahren nach Ansprüchen 1-5, **dadurch gekennzeichnet,** daß der Abstand zwischen den charakteristischen Punkten (12, 13; 16, 17) durch automatisches Messen der Positionen der Punkte bestimmt wird.

7. Ein Verfahren nach Anspruch 6, **dadurch gekennzeichnet,** daß eines der Sensormittel (21, 23; 31, 33) stationär ist, während das zweite Sensormittel (23, 21; 33, 31) bewegt wird, bis es an dem Schambein (12, 13) oder der Achsel (16, 17) angreift, worauf die Bewegung fortgesetzt wird, wodurch die Körperhälfte bewegt wird, bis das erste Sensormittel von der Achsel oder dem Schambein durch eine Kraft vorbestimmter Größe beeinflußt wird, wobei zu diesem Zeitpunkt die Lage des zweiten Sensormittels gemessen wird.

8. Ein Verfahren nach Anspruch 4 oder 5, **dadurch gekennzeichnet,** daß nach dem Messen die Körperhälfte quer zum Förderband (2, 3) mittels eines der Sensormittel (21, 23; 31, 33) in eine Lage relativ zu mindestens einem Bearbeitungsmittel (7, 8) verlagert wird, und zwar bestimmt auf Basis des Abstandes zwischen dem Schambein und der Achselhöhle.

9. Ein Verfahren nach Anspruch 1, **dadurch gekennzeichnet,** daß mindestens eines der oben angeordneten Bearbeitungsmittel (7, 8), und zwar in Fortsetzung der oder zwischen den Förderbändern (2, 3) relativ zu einer Körperhälfte in einer Richtung quer zu den Förderbändern (2, 3) entsprechend dem automatisch gemessenen Abstand zwischen den beiden charakteristischen Punkten (12, 13; 16, 17) der Körperhälfte verlagert wird.

10. Ein Verfahren nach Ansprüchen 1-9, und bei dem die entsprechenden Körperhälften (10, 11) paarweise, eines nach dem anderen, vorgeschoben werden, **dadurch gekennzeichnet,** daß eine der Körperhälften (11) durch Umkehr ein des der Förderbänder (3) zur Anlage gegen die Ausrichtmittel (34) gebracht wird.

11. Eine Anlage zur Bearbeitung von Körperhälften (10, 11), umfassend Förderbänder (2-6) zum Fördern der Körperhälften, die nacheinander und in horizontaler Anordnung mit ihrer Längsrichtung im allgemeinen senkrecht zur Förderrichtung zu Bearbeitungsmitteln (7, 8) gefördert werden, **dadurch gekennzeichnet,** daß sie Ausrichtmittel (24, 34), die zwischen einer Ruheposition, in der eine Körperhälfte (10, 11) die Mittel frei passiert, und einer aktiven Position, in der die Ausrichtmittel (24, 34) anhalten und in ausrichtender Weise gegen eine Körperhälfte auf dem laufenden Förderband anliegen, bewegbar sind, Mittel (21, 31; 23, 33) zum automatischen Messen des Abstandes zwischen zwei charakteristischen Punkten (12, 13; 16, 17) an der Körperhälfte und Mittel zum Verlagern der Körperhälfte (10, 11) und mindestens eines Bearbeitungsmittels (7, 8) relativ zueinander in einer Richtung quer zu den Förderbändern (2, 3) entsprechend dem automatisch gemessenen Abstand zwischen den beiden charakteristischen Punkten (12, 13; 16, 17) der Körperhälfte umfaßt.

12. Eine Anlage nach Anspruch 11, **dadurch gekennzeichnet,** daß sie ein erstes mechanisches Sensormittel (23, 33), das zum Angriff an dem Schambein (12, 13) einer Körperhälfte (10, 11), die gegen das Ausrichtmittel (24, 34) anliegt, ausgebildet ist, sowie ein zweites mechanisches Sensormittel (21, 31), das zum Angriff an der Achselhöhle (16, 17) der Körperhälfte ausgebildet ist, umfaßt und daß die Sensormittel geeignet sind, um quer zu dem Förderband (2, 3) in Eingriff auseinander bewegt zu werden.

13. Eine Anlage nach Anspruch 11 oder 12, **dadurch gekennzeichnet,** daß das Förderband einen umkehrbaren Abschnitt (3) aufweist.

14. Eine Anlage nach Ansprüchen 11-13, **dadurch gekennzeichnet**, daß eines der Sensormittel (21, 31, 23, 33) verlagerbar und geeignet ist, eine Körperhälfte (10, 11) quer zur Richtung des Förderbandes zu verlagern.

15. Eine Anlage nach Ansprüchen 11-14, **dadurch gekennzeichnet,** daß es drei parallele Förderbänder (4, 5, 6) umfaßt und daß die Bearbeitungsmittel eine Rückenteil-Säge (7) und eine Vorderteil-Säge (8) umfassen, von denen eine oder beide quer zur Richtung des Förderbandes verlagerbar sind.

## Revendications

1. Procédé de traitement de demi-carcasses (10, 11) transportées en succession sur des moyens de traitement (7, 8) par l'intermédiaire de courroies de convoyeur (2, 3) positionnées à la suite l'une de l'autre, lesdites demi-carcasses étant situées horizontalement en ayant leur direction longitudinale de manière générale perpendiculaire à la direction de transport, caractérisé en ce que des moyens de réalignement (24, 34) sont déplacés à l'intérieur du trajet de déplacement d'une demi-carcasse, vers le bas, vers la courroie de convoyeur (2, 3), en ce que la demi-carcasse lorsqu'elle est en appui contre les moyens de réalignement est arrêtée et alignée selon un angle prédéterminé, en ce que la distance entre deux points caractéristiques (12, 13; 16, 17) de la demi-carcasse est mesurée de manière automatique alors que la demi-carcasse est en appui contre les moyens d'alignement, et en ce que la demi-carcasse (10, 11) et au moins un premier des moyens de traitement (7, 8) est déplacé par rapport à l'autre dans une direction transversale par rapport aux courroies de convoyeur (2, 3) conformément à la distance mesurée de manière automatique entre les deux points caractéristiques (12, 13; 16, 17) de la demi-carcasse.

2. Procédé selon la revendication 1, caractérisé en ce que le dos de la demi-carcasse (10, 11) est amené à venir en appui contre les moyens de réalignement (24, 34).

3. Procédé selon la revendication 1 ou 2, caractérisé en ce que les points caractéristiques sont le pubis (12, 13) et l'aisselle (16, 17) de la demi-carcasse.

4. Procédé selon l'une quelconque des revendications 1 à 3, caractérisé en ce que pour déterminer la distance existant entre les points caractéristiques (12, 13; 16, 17), sont agencés des détecteurs mécaniques (21, 23; 31, 33).

5. Procédé selon la revendication 4, caractérisée en ce que les deux moyens formant détecteur (21, 23; 31, 33) sont relativement écartés transversalement par rapport à la courroie de convoyeur pour venir en contact avec le pubis (12, 13) et l'aisselle (16, 17) d'une demi-carcasse (10, 11), après quoi la distance entre ces points de contact est déterminée.

6. Procédé selon l'une quelconque des revendications 1 à 5, caractérisé en ce que la distance existant entre les points caractéristiques (12, 13; 16, 17) est déterminée en mesurant de manière automatique les positions des points.

7. Procédé selon la revendication 6, caractérisé en ce qu'un premier des moyens formant détecteur (21, 23; 31, 33) est stationnaire, alors que le second moyen formant détecteur (23, 21; 33, 31) est déplacé jusqu'à ce qu'il vienne en contact avec le pubis (12, 13) ou l'aisselle (16, 17), après quoi le mouvement se poursuit, la demi-carcasse étant par conséquent déplacée jusqu'à ce que le premier moyen formant détecteur soit influencé par l'aisselle ou le pubis par une force ayant une dimension prédéterminée, moment au niveau duquel la position du second moyen formant détecteur est mesurée.

8. Procédé selon la revendication 4 ou 5, caractérisé en ce qu'après la mesure, la demi-carcasse (10, 11) est déplacée transversalement à la courroie de convoyeur (2, 3) par l'intermédiaire d'un premier des moyens formant détecteur (21, 23; 31, 33) vers une position par rapport à au moins un des moyens de traitement (7, 8) déterminée sur la base de la distance existant entre le pubis et l'aisselle.

9. Procédé selon la revendication 1, caractérisée en ce qu'au moins un premier des moyens de traitement (7, 8) placé au-dessus, à la suite des courroies de convoyeur (2, 3) ou entre celles-ci est déplacé par rapport à une demi-carcasse dans une direction transversale par rapport aux courroies de convoyeur (2, 3) conformément à la distance mesurée de manière automatique existant entre les deux points caractéristiques (12, 13; 16, 17) de la demi-carcasse.

10. Procédé selon l'une quelconque des revendications 1 à 9, dans lequel les demi-carcasses correspondantes (10, 11) avancent par paire l'une après l'autre, caractérisé en ce qu'une première des demi-carcasses (11) est amenée à venir en appui contre les moyens de réalignement (34) en inversant une des courroies de convoyeur (3).

11. Installation de traitement de demi-carcasses (10, 11) comportant des courroies de convoyeur (2 à 6) destinées à transporter des demi-carcasses, qui sont transportées en succession et en étant situées horizontalement en ayant leur direction longitudinale de manière générale perpendiculaire à la direction de transport, sur des moyens de traitement (7, 8), caractérisée en ce qu'elle comporte des moyens de réalignement (24, 34) qui sont mobiles entre une position de repos dans laquelle une demi-carcasse (10, 11) passe librement devant les moyens, et une position active dans laquelle les moyens de réalignement (24, 34) arrêtent une demi-carcasse située sur la courroie de convoyeur se déplaçant et viennent en appui, d'une manière effectuant un réalignement, contre une demi-carcasse, des moyens (21, 31; 23, 33) pour mesurer de manière automatique la distance existant entre deux points caractéristiques (12, 13; 16, 17) de la demi-carcasse, et des moyens pour déplacer la demi-carcasse (10, 11) et au moins un des premiers moyens de traitement (7, 8) l'un par rapport à l'autre dans une direction transversale par rapport aux courroies de convoyeur (2, 3) conformément à la distance mesurée de manière automatique entre les deux points caractéristiques (12, 13; 16, 17) de la demi-carcasse.

12. Installation selon la revendication 11, caractérisée en ce qu'elle comporte un premier moyen formant détecteur mécanique (23, 33) adapté pour venir en contact avec le pubis (12, 13) d'une demi-carcasse (10 , 11) située en appui contre les moyens de réalignement (24, 34), un second moyen formant détecteur mécanique (21, 31) adapté pour venir en contact avec l'aisselle (16, 17) de la demi-carcasse, et en ce que les moyens formant détecteur sont adaptés pour être écartés transversalement par rapport à la courroie de convoyeur (2, 3) en contact.

13. Installation selon la revendication 11 ou 12, caractérisée en ce que la courroie de convoyeur a un tronçon réversible (3).

14. Installation selon l'une quelconque des revendications 11 à 13, caractérisée en ce qu'un premier des moyens formant détecteur (21, 31, 23, 33) peut être déplacé et est adapté pour déplacer une demi-carcasse (10, 11) transversalement par rapport à la direction de la courroie de convoyeur.

15. Installation selon l'une quelconque des revendications 11 à 14, caractérisée en ce qu'elle comporte trois courroies de convoyeur parallèles (4, 5, 6) et en ce que les moyens de traitement comportent une scie (7) de partie arrière et une scie (8) de partie avant, dont l'une ou les deux peuvent être déplacées transversalement par rapport à la direction de la courroie de convoyeur.
